# EUROPEAN PATENT APPLICATION

(11) **EP 1 830 581 A1**
(43) Date of publication of application: **05.09.2007**
(21) Application number: 07012476.3
(22) Date of filing: 29.10.2001
(51) Int. Cl.: H04N 7/36

(54) **Image matching method and apparatus**

(30) Priority: 30.10.2000 JP 2000330297; 22.05.2001 JP 2001152262
(62) Divisional of application: 01309141.8
(71) Applicant: Monolith Co., Ltd., Tokyo 106-0045 (JP)
(72) Inventor: Akiyoshi, Kozo, Tokyo 106 0045 (JP); Akiyoshi, Nobuo, Tokyo 106 0045 (JP)
(74) Representative: Schröer, Gernot H.

(57) **Abstract**

An image matching method for processing a sequence of image frames is provided. Matching between two adjacent frames such as a pair of the first frame (F1) and the second frame (F2), a pair of the second frame (F2) and the third frame (F3), ... , and a pair of the (n-1)-th frame and the n-th frame (Fn) is sequentially processed. During the matching process, corresponding point files (M1, M2, ..., Mn-1) for the frame pairs are generated and integrated into a single corresponding point file (KM) for a pair of the first frame (F1) and the n-th frame (Fn). The first frame (F1) and the n-th frame (Fn) are stored as key frames together with the single corresponding point file (KM).

## Description

The present invention relates to an image compression technique. The present invention particularly relates to an image matching method for processing matching between image frames and compressing the image data, and an image processing method and an image processing apparatus using the matching method.

Digital image processing techniques have been rapidly developed and it is now common for users to record a moving picture for a long time and replay the recorded picture. The moving picture captured by a digital camera is input to a computer, and the picture is attached to an electric mail and used for communication. The captured picture is also used for 3-D CG modeling, rendering and animation. As the use of the moving picture has widely spread, high quality of the picture has been demanded, and manufacturer has competed in high density of CCD and high-speed image capturing process.

In order to improve the quality of the moving picture, both the number of the pixels and the number of the image frames must be increased, and it is therefore an inevitable result that the amount of digital image data becomes large. The digital image data are recorded in a small memory card attached to a handy digital camera, or stored in a hard disc of a computer, or transmitted by an electric mail via the Internet. For such uses, a large amount of the image data is difficult to handle, and it easily reaches to the limitation of the size of record media or the limitation of communication bandwidth. Therefore there is no doubt that image data compression becomes a key technology in both technical and practical senses.

In a medical field, technology such as CT and MRI for capturing a cross-sectional picture of an affected part of a patient are used in order to improve quality of medical examination. A large number of the cross-sectional pictures are captured around the affected part, because high quality of image data is required for the medical examination. The technology for compressing a sequence of the pictures is required in this field, in order to a medical institution to cope with a large amount of medical examination data to be stored.

Various respective aspects and features of the invention are defined in the appended claims. Features from the dependent claims may be combined with features of the independent claims as appropriate and not merely as explicitly set out in the claims.

The present invention has been made in view of the foregoing circumstance and embodiments thereof can provide an image matching method and an image processing apparatus using the image matching method to solve the above problems.

Embodiments of the present invention are to provide a technology by which a moving picture is encoded.

Embodiments of the present invention are to provide an image processing technology by which not only a moving picture but also any sequence of images can be effectively encoded and the image compression ratio can be improved.

According to one aspect of the present invention, an image matching method for processing a sequence of image frames is provided. The method comprises processing matching between two adjacent image frames such as a pair of a first image frame and a second image frame, a pair of the second image frame and a third image frame, ... , and a pair of an (n-1)-th image frame and an n-th image frame, generating a corresponding point file for each of the image frame pair, which contains information related to corresponding points between the image frame pair, and integrating the generated n-1 corresponding point files into a single corresponding point file for a pair of the first image frame and the n-th image frame.

The corresponding point means any region of one image frame, which corresponds to other region of another image frame. Such corresponding point may be a pixel or a dot of the image, a set of the pixels or dots, a continuous part or a set of discontinuous parts, or a line such as a contour or an edge. The corresponding point file describes correspondence relation between the image frames. For instance, the file contains a pair of the coordinates of the corresponding points.

The method may further comprise storing a function of a locus of at least one image region which moves from the first image frame through the n-th image frame. The locus can be obtained by tracking the corresponding points between the image frames. The function describing the locus may be a parametric function such as a NURBS function or a Bézier function, which approximates the locus.

The method may further comprise storing the first image frame and the n-th image frame as key frames together with the single corresponding information file for the pair of the first image frame and the n-th image frame. An image frame for which the matching fails may be also stored as a key frame. For such mismatched key frames, another corresponding point file may be generated by the integration.

The method may further comprise processing intra-frame compression of the first image frame and the n-th image frame and storing the compressed image frames as key frames together with the single corresponding information file for the pair of the first image frame and the n-th image frame. For the intra-frame compression, an image encoding method such as JPEG may be used. The corresponding point file may be also compressed using a dictionary based compression or Huffman encoding.

According to another aspect of the present invention, an image processing apparatus is provided. The apparatus comprises an image input unit, a matching unit, a temporary storing unit, an integrating unit, and a key frame storing unit. The image input unit accepts an input of a sequence of image frames. The matching unit processes matching between each of pairs of adjacent image frames among the sequence, and generates a corresponding point file for each of the image frame pair, which contains information related to corresponding points between the image frame pair. This corresponding point file is also referred to as "an inter-frame corresponding point file". The temporary storing unit stores the generated corresponding point files. The integrating unit integrates the generated corresponding point files in order of the sequence, and generates a single corresponding point file for a pair of key flames which are a start point and an end point of the integration. This single corresponding point file is also referred to as "inter-key-frame corresponding point file". The key frame storing unit stores the key frames and the single corresponding point file for the pair of the key frames in association. The image frames other than the key frames are called "intermediate frames".

The apparatus may further comprise a transmitting unit which transmits the key frames and the single corresponding point file for the pair of the key frames to a user terminal to restore the sequence of the image frames. The key frame storing unit may store the key frame and the inter-key-frame corresponding point file temporarily and discard these data after the transmission of the data.

The apparatus may further comprise a tracking unit which tracks a locus of at least one image region which moves among the sequence of the image frames using the corresponding point files for the pairs of the image frames and obtains the locus as function data, and the key frame storing unit may store the function data in addition to the single corresponding point file for the pair of the key frames.

The image region is any region of the image frame and may be a pixel or a dot of the image, a set of the pixels or dots, a continuous part or a set of discontinuous parts, or a line such as a contour or an edge. The tracking unit may sequentially track the corresponding points stored in the inter-frame corresponding point files and thereby obtain the locus of the corresponding points of the key frames, which move between the intermediate frames, and then convert the locus to a function. The tracking unit may sequentially track the corresponding points stored in the inter-key-frame corresponding point files of a plurality of the key frames and thereby obtain the locus of the corresponding points which move between the plurality of the key frames.

The integrating unit may terminate the integration when the pair of the adjacent image frames are not matched properly, leaving the former image frame of said pair as an end point of the integration, and then resume next integration using the latter image frame of said pair as a new start point of the next integration. The key frame storing unit may store such a mismatched image frame as a key frame.

According to still another aspect of the present invention, a computer program executable by a computer is provided. The program comprising the functions of processing matching between each of pairs of adjacent image frames among a sequence of image frames, and generates a corresponding point file for each of the image frame pair, which contains information related to corresponding points between the image frame pair, integrating the generated corresponding point files in order of the sequence, and generates a single corresponding point file for a pair of key frames which are a start point and an end point of the integration, and providing the key frames and the single corresponding point file for the pair of the key frames in association.

According to still another aspect of the present invention, an image processing method is provided. The method comprises obtaining a plurality of corresponding point files each of which describes corresponding points between a pair of key frames, and generating a new corresponding point file using the plurality of the corresponding point files. The method may obtain a plurality of the corresponding point files and generate a new corresponding point file by integrating the plurality of the corresponding point files in a temporal direction. As another way of the integration, one corresponding point file may be generated using bilinear interpolation of the corresponding point file of the key frames captured from vertically different visual points, and the corresponding point file of the key frames captured from horizontally different visual points. The method may further comprise generating an intermediate frame between the key frames by interpolation using the generated new corresponding point file.

Moreover, any arbitrary combination of the above-mentioned structural components in the present invention is still effective as an embodiment when applied as a method, a system, a server, a terminal, and a computer program, and so forth.

The invention will be now described by way of example with reference to the accompanying drawings, throughout which like parts are referred to by like references, and in which:
- Fig. 1: is a block diagram of an image processing system according to an embodiment of the present invention;
- Fig. 2: explains how corresponding points between two adjacent image frames are integrated sequentially;
- Fig. 3: is a flow chart of a matching procedure for integrating correspondence relations of the two adjacent frames and thereby generating correspondence relation between two key frames;
- Fig. 4: explains image data in which key frame data and inter-key-frame corresponding point data are associated;
- Fig. 5: is a flow chart of a procedure for decoding the image data;
- Figs. 6A and 6B: explain an example of locus function data;
- Fig. 7: explains a locus function file which contains the corresponding point data of the key frames and the locus function data in association.

The invention will now be described on the basis of the preferred embodiments, which do not intend to limit the scope of the present invention, but exemplify the invention. All of the features and the combinations thereof described in the embodiment are not necessarily essential to the invention.

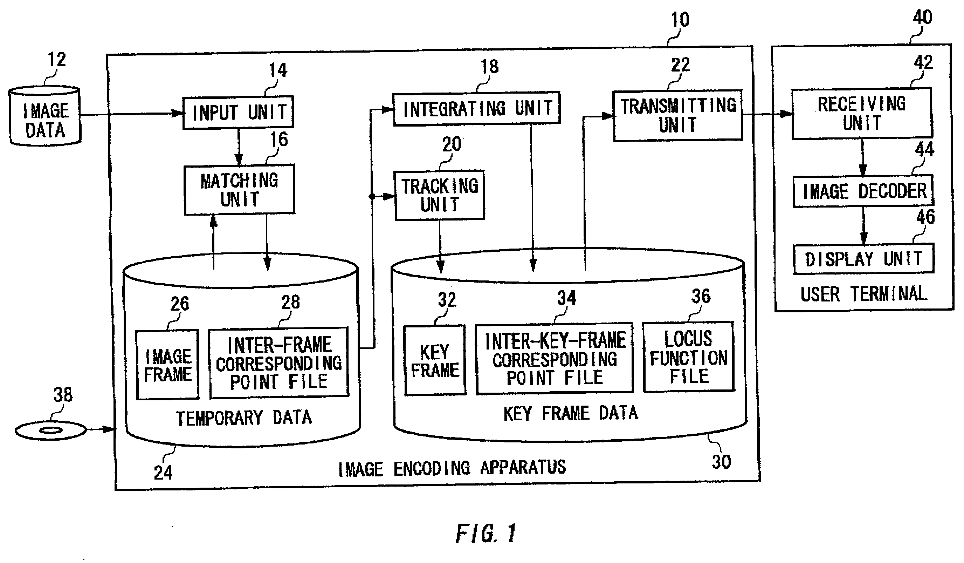

Fig. 1 is a block diagram of an image processing system according to an embodiment of the present invention. An image encoding apparatus 10 and a user terminal 40 communicate with each other via the Internet, which is not shown in the figure. The image encoding apparatus 10 includes an image input unit 14, a matching unit 16, an integrating unit 18, a tracking unit 20, a transmitting unit 22, a temporary data storage 24, and a key frame data storage 30. The user terminal 40 includes a receiving unit 42, an image decoder 44, and a display unit 46. The image encoding apparatus 10 has normal computer functions, and the structure of the apparatus 10 may be implemented with a CPU, memory and a program with an image processing function loaded in the memory. In the figure, however, the blocks are not divided in terms of hardware and/or software component, but in terms of function. The skilled in the art can therefore understand that the various combinations of hardware and software components can achieve the function of these blocks. The function of the blocks may be stored as software in a recording medium 38. The software may be installed to a hard disc and then loaded in a memory to be executed by a CPU.

The image input unit 14 of the image encoding apparatus 10 reads a sequence of image frames from an image data storage 12 and stores the data temporarily as image frame data 26 in the temporary data storage 24. The image data storage 12 may be provided in the image encoding apparatus 10 or may be provided in any other servers that are connected to the apparatus 10 via any communication means. The matching unit 16 obtains the image frame data 26 stored in the temporary data storage 24 and sequentially calculates matching for every pair of two adjacent image frames of the sequence to obtain corresponding points between the two adjacent image frames. The matching unit 16 then stores a set ofinter-frame corresponding point files 28, each of which describes the corresponding points between the two adjacent image frames, in the temporary data storage 24.

For the convenience of the explanation, one image frame of the image frame sequence is called a start frame and another image frame an end frame. The integrating unit 18 refers to the inter-frame corresponding files 28 stored in the temporary data storage 24 and integrates the corresponding points of all intermediate frames between the start frame and the end frame in order of the sequence. Thus the integrating unit 18 obtains corresponding points between the start frame and the end frame. The start frame and the end frame are called "key frames". The integrating unit 18 then stores the key frame data 32 and an inter-key-frame corresponding point file 34, which describes the corresponding points between the key frames, in association in the key frame data storage 30.

The tracking unit 20 tracks the corresponding points using the inter-frame corresponding point file 28 and thereby obtains a locus of the corresponding points in the image frame sequence as a parametric function such as a NURBS function or a Bézier function. The tracking unit 20 then stores the obtained locus data as a locus function file 36 in the key frame data storage 30. The transmitting unit 22 transmits the key frame data 32 and the inter-key-frame corresponding point file 34 to the user terminal 40. The transmitting unit 22 may transmit the key frame data 32 and the locus function file 36 to the user terminal 40.

The receiving unit 42 of the user terminal 40 receives the key frame data 32, and the inter-key-frame corresponding point file 34 or the locus function file 36. The image decoder 44 decodes intermediate frames from the key frame data 32 using the inter-key-frame corresponding point file 34 or the locus function file 36. The display unit 46 restores and displays the original image sequence using the key frames and the decoded intermediate frames.

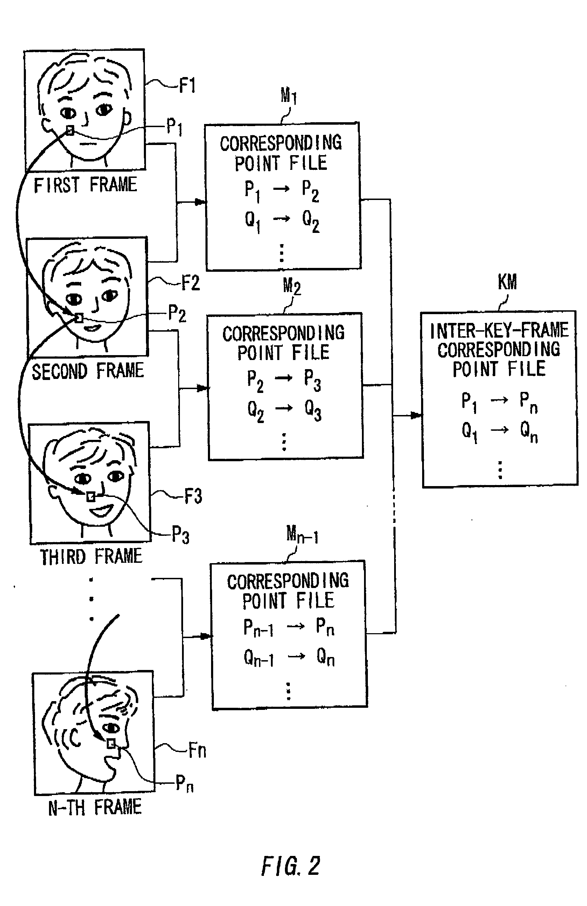

Fig. 2 explains how the corresponding points are integrated sequentially. In the figure, corresponding image regions P1, P2, P3, ..., Pn are shown in the sequence of image frames F1, F2, F3, ..., Fn. The matching unit 16 calculates matching of the pairs of the image frames F1 and F2, F2 and F3, and so on. This matching process generally obtains correspondence relation on any image region between the two image frames. Such correspondence relation may be on a point, a particular part, and a line such as a contour or an edge of the image frames. A multi-resolution critical point filter technique and an image matching process technique using the filter technique, both of which are disclosed in Japanese Patent No. 2927350 previously proposed by the applicant of the present invention, may be adopted as the matching process. Other matching techniques such as a method utilizing color information, a block matching method utilizing brightness and location information, a method utilizing extracted contours or edges, and any combination of these methods can be also applied to the matching process.

The matching unit 16 stores the correspondence relations obtained in the matching calculation for the pairs of the image frames F1 and F2, F2 and F3, ..., and Fn-1 and Fn, in the corresponding point files M1, M2, ..., Mn-1 respectively. The integrating unit 18 refers to these corresponding point files M1, M2, ..., Mn-1 sequentially and thereby obtains a correspondence relation between the image frame F1 and Fn, and then stores the obtained correspondence relation in an inter-key-frame corresponding point file KM. For instance, the region P1 in the first image frame F1 corresponds to the region P2 in the second image frame F2, and further corresponds to the region P3 in the third image frame F3. These correspondence relations are sequentially integrated and it is then detected that the region P1 in the first image frame F1 corresponds to the region Pn in the n-th image frame Fn.

As described above, the correspondence relation between the non-adjacent image frames F1 and Fn is finally obtained by the matching unit 16 and the integrating unit 18. If the matching between the non-adjacent image frames F1 and Fn is directly calculated, the correspondence relation cannot be properly obtained because of the discontinuity between these image frames. However, when the correspondence relations between the adjacent image frames are sequentially integrated, the precise correspondence relation between the discontinuous frames can be obtained.

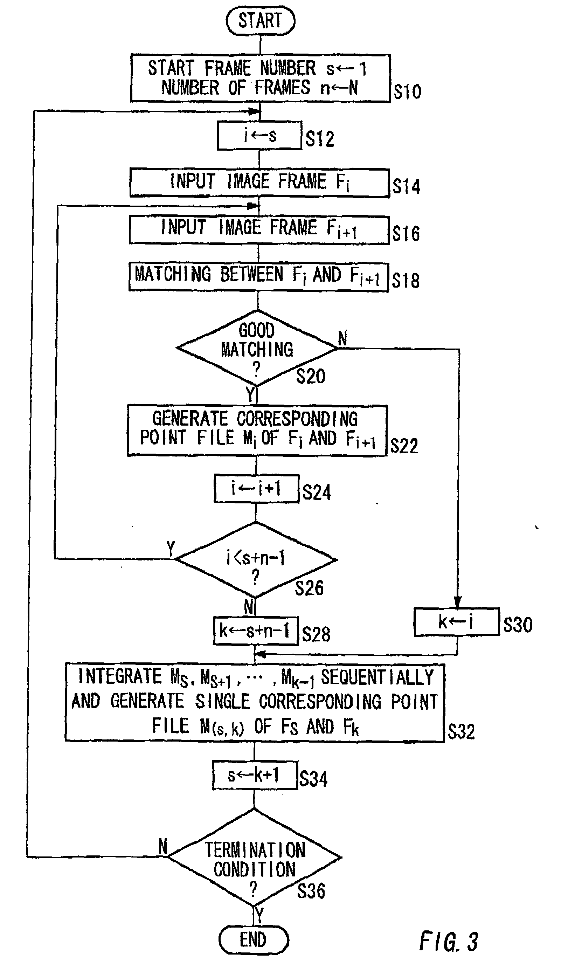

Fig. 3 is a flow chart of the matching procedure for integrating the correspondence relations of the pairs of the adjacent frames and thereby generating the correspondence relation between the key frames. A start frame number s is set at 1, and the number n of the frames to be integrated is set at N (S10). The start frame number s is assigned to the variable i that indicates the current frame number (S12). The image frame Fi is input (S14). The image frame Fi+1 is input (S16). The matching unit 16 calculates the matching between the image frames Fi and Fi+1 (S18). The matching unit 16 judges whether the matching is good or bad (S20). If the matching is good (Y of S20), the corresponding point file Mi of the image frames Fi and Fi+1 is generated and stored in the temporary data storage 24 (S22). The variable i is incremented by 1 (S24) and it is checked whether the variable i is smaller than s+n-1 (S26). If the variable i is smaller than s+n-1 (Y of S26), the procedure goes back to the step S16. If the variable i equals s+n-1 (N of S26), the value s+n-1 is assigned to a variable k (S28).

The integrating unit 18 reads the corresponding point files Ms, Ms + 1, ..., Mk-1 generated by the matching unit 16 from the temporary data storage 24, and sequentially integrates these files and generates a single corresponding point file M(s, k) for the image frame Fs and Fk (S32). The integrating unit 18 stores the image frames Fs and Fk as the key frame data 32 and the corresponding point file M(s, k) as the inter-key-frame corresponding point file 34. The value k+1 is assigned to the start frame number s (S34). The termination condition, for instance whether the start frame number s is greater than a predefined value or not, is checked (S36). If the condition is not satisfied (N of S36), the procedure goes back to the step S12, and if the condition is satisfied (Y of S36), the procedure terminates.

If the matching of the step S20 is bad (N of S20), the value of the variable i is assigned to the variable k (S30) and the procedure goes to the step S32. The bad matching means that the image frame Fs to Fi constitutes a continuous moving picture but the image frame Fi+1 is independent of the previous image frames, for instance, because of a scene change. In this case, the image frames Fs and Fi become a pair of key frames and the corresponding point files of the image frame Fs to Fi are integrated, and then the frame Fi+1 becomes a new start frame and matching and integration for the image frame Fi+1 onward are processed.

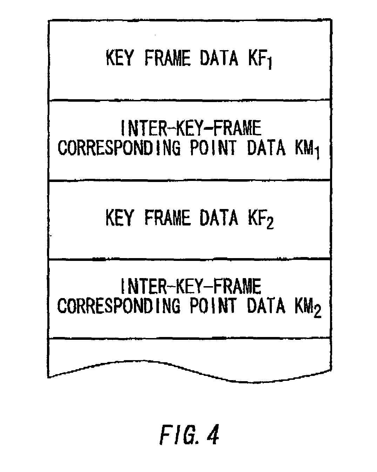

Fig. 4 explains the image data in which key frame data and inter-key-frame corresponding point data are associated. The inter-key-frame corresponding point data KM1 are inserted between the key frame data KF1 and the key frame data KF2, and thus the image data are formed in an order of the key frame data and inter-key-frame corresponding data. The key frame data storage 30 may store the key frame data 32 and the inter-key-frame corresponding point file 34 in this form or the transmitting unit 22 may convert the image data to this form when the image data is transmitted to the user terminal 40. Furthermore, the key frame data may be compressed by any image compression method such as JPEG and the inter-key-frame corresponding point data may be also compressed by any document compression method.

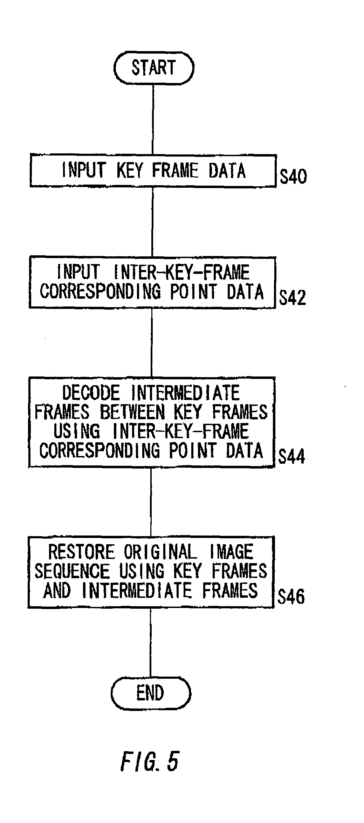

Fig. 5 is a flow chart of a procedure for decoding the image data. The receiving unit 42 of the user terminal 40 receives the image data transmitted by the transmitting unit 22 of the image encoding apparatus 10. The receiving unit 42 then extracts the key frame data and the inter-key-frame corresponding point data from the image data (S40, S42). The image decoder 44 decodes intermediate frames between the key frames based on the inter-key-frame corresponding point data (S44). The display unit 46 restores and displays the original image sequence using the key frames and the decoded intermediate frames (S46).

In the above explanation, once the correspondence relation between the key frames is obtained, information on the corresponding points between the intermediate frames are discarded and only the key frame data and inter-key-frame corresponding point file are transmitted to the user terminal 40. However, at least part of the information on the corresponding points between the intermediate frames may be provided to the user terminal 40 and thereby continuity of the restored moving picture can be improved. As another method, a locus of the corresponding points between the intermediate frames may be expressed as a function and the function data may be provided to the user terminal 40.

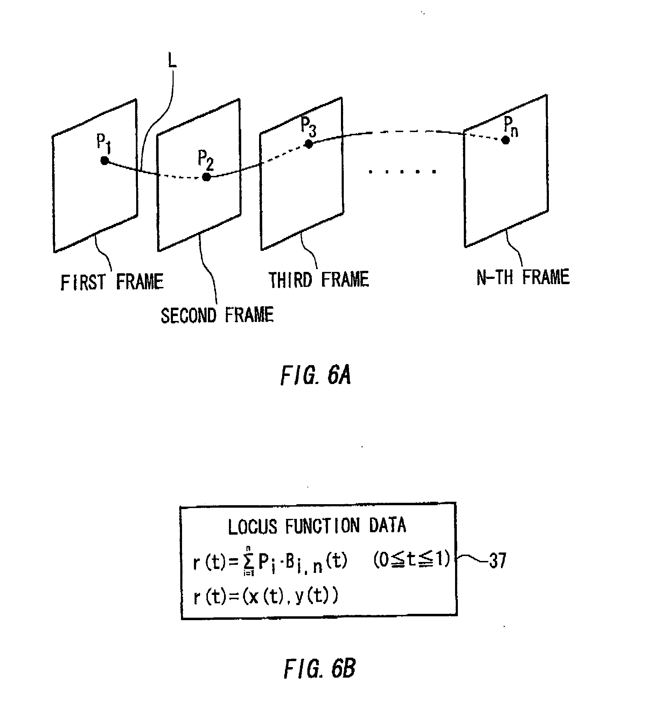

Figs. 6A and 6B explain an example of the locus function data. As shown in Fig. 6A, the point P1 in the first frame corresponds to the point P2 in the second frame, and corresponds to the point P3 in the third frame, ..., and corresponds to the point Pn in the n-th frame. Define a function L that passes the points P1 and Pn which are corresponding points in the key frames and approximates the locus from the intermediate points P1 to Pn~1. The function L is, for instance, a parametric function such as NURBS function or a Bézier function. The tracking unit 20 refers to the inter-frame corresponding point files 28 and applies an appropriate parametric function to the corresponding points and thereby obtains the locus function data 37 as shown in Fig. 6B. When the locus of the corresponding points is expressed as a function, if the dimension n of the function is decreased, the locus can be expressed in a smaller data size than the original corresponding point files 28. Furthermore, when the locus is expressed as a function, corresponding points can be calculated for non-existent intermediate image frames, so that the number of the restored intermediate frames can increase and continuity of the restored image sequence can be enhanced.

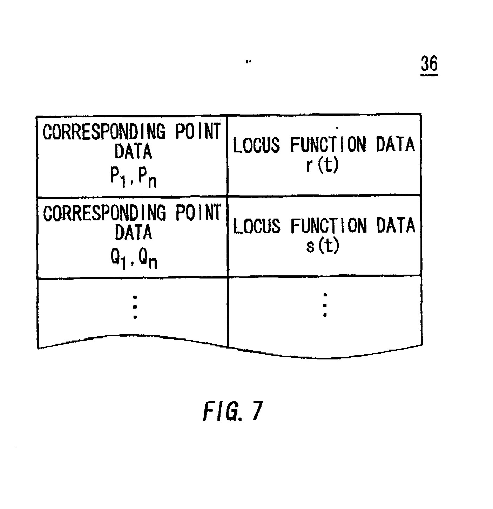

Fig. 7 explains the locus function file 36 which contains the corresponding point data of the key frames and the locus function data in association. In the locus function file 36, the corresponding points of the key frames and the locus function that approximates the locus of the corresponding points between the intermediate frames are associated. The user terminal 40 can decode the intermediate frames using the key frame data 32 and the locus function file 36 and restore the original image sequence.

As described above, according to the image encoding apparatus using the image matching method of the embodiment, the intermediate frames are discarded and the image can be effectively encoded and compressed using only the key frames and inter-key-frame corresponding point file. Since the correspondence relation between the key frames are generated by the sequential matching between the intermediate frames of the image frame sequence, more precise correspondence relation can be obtained as compared to the direct matching between the key frames.

Although the present invention has been described by way of exemplary embodiments, it should be understood that those skilled in the art might make many changes and substitutions without departing from the spirit and the scope of the present invention that is defined by the appended claims. Such alteration is now stated.

Although the matching process for the moving picture is explained above, the present invention can be applied to not only the moving picture, but also a set of pictures captured from different visual points, or a set of cross sectional images of an affected part captured by a CT scanner in a medical field. Since these images are a set of images continuously expanded in a spatial direction, the images can be regarded as a continuous image frame sequence like a moving picture. Therefore even for this kind of images, the corresponding points between the adjacent image frames can be tracked sequentially and the correspondence relation for any image regions between non-adjacent image frames can be exacted.

Further inventive features of the present embodiments are defined in the following paragraphs:
1. An image processing method characterised in that it comprises:
   obtaining a plurality of corresponding point files each of which describes corresponding points between a pair of key frames;
   and generating a new corresponding point file using the plurality of the corresponding point files.
2. An image processing method characterised in that comprises:
   obtaining a plurality of corresponding point files each of which describes corresponding points between a pair of key frames;
   and generating a new corresponding point file by integrating the plurality of the corresponding point files in a temporal direction.
3. A method according to paragraph 1 or 2, characterised in that it further comprises generating an intermediate frame between the key frames by interpolation using the generated new corresponding point file.
4. Computer software having program code for carrying out a method according to paragraph 1.

## Claims

1. An image matching method for processing a sequence of image frames, **characterised in that** it comprises:
processing matching between two adjacent image frames such as a pair of a first image frame and a second image frame, a pair of the second image frame and a third image frame, ... , and a pair of an (n-1)-th image frame and an n-th image frame;
generating a corresponding point file for each of the image frame pair, which contains information related to corresponding points between the image frame pair; and
integrating the generated n-1 corresponding point files into a single corresponding point file for a pair of the first image frame and the n-th image frame.

2. The method of claim 1 **characterised in that** it further comprises storing a function of a locus of at least one image region which moves from the first image frame through the n-th image frame.

3. The method of claim 1 **characterised in that** it further comprises storing the first image frame and the n-th image frame as key frames together with the single corresponding information file for the pair of the first image frame and the n-th image frame.

4. The method of claim 3 **characterised in that** an image frame for which the matching fails is also stored as a key frame.

5. The method of claim 1 **characterised in that** it further comprises processing intra-frame compression of the first image frame and the n-th image frame and storing the compressed image frames as key frames together with the single corresponding information file for the pair of the first image frame and the n-th image frame.

6. An image processing apparatus **characterised in that** it comprises;
an image input unit (14) which accepts an input of a sequence of image frames; a matching unit (16) which processes matching between each of pairs of adjacent image frames among the sequence, and generates a corresponding point file for each of the image frame pair, which contains information related to corresponding points between the image frame pair;
a temporary storing unit (24) which stores the generated corresponding point files;
an integrating unit (18) which integrates the generated corresponding point files in order of the sequence, and generates a single corresponding point file for a pair of key frames which are a start point and an end point of the integration; and
a key frame storing unit (30) which stores the key frames and the single corresponding point file for the pair of the key frames in association.

7. The apparatus of claim 6 **characterised in that** it further comprises a transmitting unit (22) which transmits the key frames and the single corresponding point file for the pair of the key frames to a user terminal (40) to restore the sequence of the image frames.

8. The apparatus of claim 6 **characterised in that** it further comprises a tracking unit (22) which tracks a locus of at least one image region which moves among the sequence of the image frames using the corresponding point files for the pairs of the image frames and obtains the locus as function data, and wherein the key frame storing unit (30) stores the function data in addition to the single corresponding point file for the pair of the key frames.

9. The apparatus of claim 6 **characterised in that** the integrating unit (18) terminates the integration when the pair of the adjacent image frames are not matched properly, leaving the former image frame of said pair as an end point of the integration, and then resumes next integration using the latter image frame of said pair as a new start point of the next integration.

10. Computer software having program code for carrying out a method according to claim 1.

11. A providing medium by which software according to claim 10 is provided.

12. A medium according to claim 11, the medium being a storage medium.

13. A medium according to claim 11, the medium being a transmission medium.
